# EUROPEAN PATENT APPLICATION

(11) **EP 4 421 967 A1**
(43) Date of publication of application: **28.08.2024**
(21) Application number: 23889854.8
(22) Date of filing: 08.09.2023
(51) Int. Cl.: H01M 50/503, H01M 50/211, H01M 50/507

(54) **BATTERY MODULE COMPRISING UPPER/LOWER-SEPARABLE BUS BAR FRAME, AND METHOD FOR ASSEMBLING SAME**

(30) Priority: 17.11.2022 KR 20220154630
(71) Applicant: LG Energy Solution, Ltd., Seoul 07335 (KR)
(72) Inventor: MUN, Ji Seon, Daejeon 34122 (KR)
(74) Representative: Goddar, Heinz J.
(86) International application number: PCT/KR2023/013533
(87) International publication number: WO 2024/106709

(57) **Abstract**

The present invention relates to a top-bottom separable busbar frame and a battery module including the same, and more particularly to a top-bottom separable busbar frame including a busbar frame disposed on at least one side of a plurality of battery cells, the busbar frame being constituted by an upper busbar frame and a lower busbar frame configured to be separated from and coupled to each other, a plurality of pass-through portions configured to allow electrode leads of the plurality of battery cells pass to extend therethrough, and a plurality of busbars disposed to face the plurality of pass-through portions, the plurality of busbars being electrically connected to the plurality of electrode leads, and a battery module including the same.

## Description

### [Technical Field]

This application claims the benefit of priority to Korean Patent Application No. 2022-0154630 filed on November 17, 2022, the disclosure of which is incorporated herein by reference in its entirety.

The present invention relates to a battery module including a top-bottom separable busbar frame and a method of assembling the same, and more particularly to a busbar frame separable into an upper part and a lower part such that an electrode lead of a battery cell can be easily inserted into a slit provided in the busbar frame and a method of assembling a battery module through the busbar frame separated into the upper part and the lower part.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Based on the structure of an electrode assembly, secondary batteries are classified into a cylindrical secondary battery, a prismatic secondary battery, and a pouch-shaped secondary battery. Thereamong, the pouch-shaped secondary battery is gradually increasing in use because a high-capacity, high-density secondary battery can be obtained, the pouch-shaped secondary battery can be manufactured with low costs, the weight of the pouch-shaped secondary battery is small, and the pouch-shaped secondary battery can have various shapes.

During an activation process of charging, discharging, and stabilizing the pouch-shaped secondary battery (hereinafter referred to as a "battery cell"), the difference in adhesion between an electrode and a separator in the cell may occur, whereby a bending phenomenon in which an electrode lead is bent or droops occurs.

As a result, the electrode lead deformed in order to assemble a battery module cannot be easily inserted into a slit of a busbar frame. Particularly, if a plurality of electrode leads is not consistently arranged, the electrode leads must be manually rearranged and inserted into the slots during an assembly process.

In connection therewith, Patent Document 1 discloses a means having a guide recess in a lower end part of a busbar frame to easily insert electrode leads of a battery cell into the busbar frame.

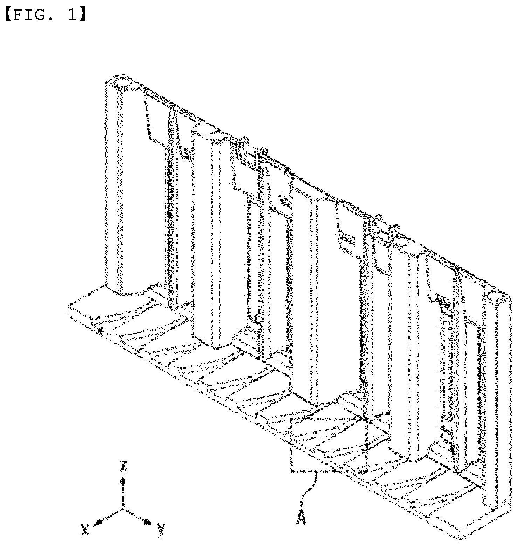

FIG. 1 is a view showing the structure of a busbar frame having a guide recess configured to facilitate assembly of a battery cell according to Patent Document 1, which is the prior art. Referring to FIG. 1, part 'A' marked at a lower part of the busbar frame is one guide recess having a gradually decreasing width, which serves as a path to facilitate insertion of a protrusion formed on a lower end of the battery cell into a slit provided in the busbar frame. However, there is the problem that the guide recess that guides the protrusion unnecessarily extends at the lower part of the busbar frame.

In addition, insertion of electrode leads that are out of position during an assembly process of the battery frame into slits of the battery frame is still difficult.

### (Prior Art Document)

(Patent Document 1) Korean Patent Application Publication No. 2022-0109031

### [Disclosure]

### [Technical Problem]

The present invention has been made in view of the above problems, and it is an object of the present invention to provide a battery module including a top-bottom separable busbar frame configured such that the busbar frame is separated into an upper part and a lower part in order to easily insert electrode leads of a battery cell and the upper part and the lower part are coupled to each other after insertion of the electrode leads and a method of assembling the same.

### [Technical Solution]

A battery module according to the present invention to accomplish the above object is a battery module (10) including a cell assembly (300) having a plurality of battery cells (310) and having a plurality of electrode leads (320), the plurality of battery cells being stacked in at least one direction, and at least one busbar frame assembly (100) connecting the plurality of electrode leads (320) to a busbar (150), wherein the cell assembly (300) and the at least one busbar frame assembly (100) constitute a cell stack assembly, and wherein the busbar frame assembly (100) includes: a busbar frame (110) disposed on at least one side of the plurality of battery cells (310), the busbar frame being constituted by an upper busbar frame (120) and a lower busbar frame (130) configured to be separated from each other, a plurality of pass-through portions (140) provided in the busbar frame (110), the plurality of pass-through portions being configured to allow the electrode leads (320) of the plurality of battery cells (310) pass to extend therethrough, and a plurality of busbars (150) disposed to face the plurality of pass-through portions (140), the plurality of busbars being electrically connected to the plurality of electrode leads (320).

Also, in the battery module according to the present invention, the electrode leads (132) may protrude through the plurality of pass-through portions (140) provided in the busbar frame (110) and lead insertion portions (154) of the busbars (150).

Also, in the battery module according to the present invention, the plurality of busbars (150) may be fastened to the upper busbar frame (120) and the lower busbar frame (130).

Also, in the battery module according to the present invention, each of the plurality of busbars (150) may include a space into which a corresponding one of the electrode leads (132) is inserted and may have a "[" shape open at one side.

Also, in the battery module according to the present invention, each of the plurality of busbars (180) may include a space into which a corresponding one of the electrode leads (132) is inserted and may have a "0" shape not open at one side.

Also, in the battery module according to the present invention, each of the plurality of busbars (150) may include at least one upper fastening hole (122) configured to allow the busbar to be fixed to the upper busbar frame (120) therethrough using a bolt and at least one lower fastening hole (132) configured to allow the busbar to be fixed to the lower busbar frame (130) therethrough using a bolt.

Also, in the battery module according to the present invention, the plurality of pass-through portions (140) may be formed by upper pass-through portions (141) of the upper busbar frame (120) and lower pass-through portions (142) of the lower busbar frame (130) being coupled to each other.

Also, in the battery module according to the present invention, the pass-through portions (140) may be located in only the upper busbar frame (120).

In addition, a battery module assembly method according to the present invention includes a first step of fixing electrode leads (320) provided at a plurality of battery cells (310) in a direction perpendicular to a busbar frame (110), a second step of fixing a plurality of busbars (150) so as to face an upper pass-through portion (140) provided in an upper busbar frame (120), a third step of inserting the electrode leads (132) downward into the upper pass-through portion (141) of the upper busbar frame (120), a fourth step of inserting the electrode leads (132) into a lower pass-through portion (142) of a lower busbar frame (130), a fifth step of fixing the lower busbar frame (130) to the upper busbar frame (120), a sixth step of fixing the plurality of busbars (150) to the lower busbar frame (130), and a seventh step of electrically connecting the electrode leads (132) to the busbars (150).

Also, in the battery module assembly method according to the present invention, in the first step, the plurality of battery cells (130) may be aligned using a jig.

Also, in the battery module assembly method according to the present invention, the second step may be performed in the sixth step.

Also, in the battery module assembly method according to the present invention, when the lower pass-through portion (142) is not provided in the lower busbar frame (130), the fourth step may be omitted.

### [Advantageous Effects]

As is apparent from the above description, a battery module including a top-bottom separable busbar frame according to the present invention and a method of assembling the same have an advantage in that it is possible to insert an electrode lead that is vertically aligned from above using a busbar frame separable into an upper part and a lower part, whereby it is possible to easily insert the electrode lead without interference, and therefore it is possible to solve difficulty caused when a bent electrode lead is directly inserted into a recess (slit) provided in the busbar frame.

### [Description of Drawings]

FIG. 1 is a view showing the structure of a busbar frame having a guide recess configured to facilitate assembly of a conventional battery cell.
FIG. 2 is an exploded perspective view showing the schematic structure of a battery module.
FIG. 3 is a perspective view of a battery cell that is mounted in a battery module according to a first preferred embodiment of the present invention.
FIG. 4 is a perspective view of a busbar frame assembly according to a first preferred embodiment of the present invention.
FIG. 5 is an exploded perspective view of the busbar frame assembly of FIG. 4.
FIG. 6 is a perspective view of a busbar according to a first preferred embodiment of the present invention.
FIG. 7 is a front view and a side view showing an example of the state of the busbar frame assembly according to the first preferred embodiment of the present invention before assembly.
FIG. 8 is a view showing the assembled state of the busbar frame assembly according to the first preferred embodiment of the present invention.
FIG. 9 is a view showing the structure of an upper busbar frame and a lower busbar frame according to a second preferred embodiment of the present invention.
FIG. 10 is a front view and a side view showing an example of the state of a busbar frame assembly according to a second preferred embodiment of the present invention before assembly.
FIG. 11 is a view showing the assembled state of the busbar frame assembly according to the second preferred embodiment of the present invention.
FIG. 12 is a view showing the assembled state of a busbar frame assembly according to a third preferred embodiment of the present invention.
FIG. 13 is a perspective view of a busbar according to a third preferred embodiment of the present invention.
FIG. 14 is a front view and a side view showing an example of the state of the busbar frame assembly according to the third preferred embodiment of the present invention before assembly.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

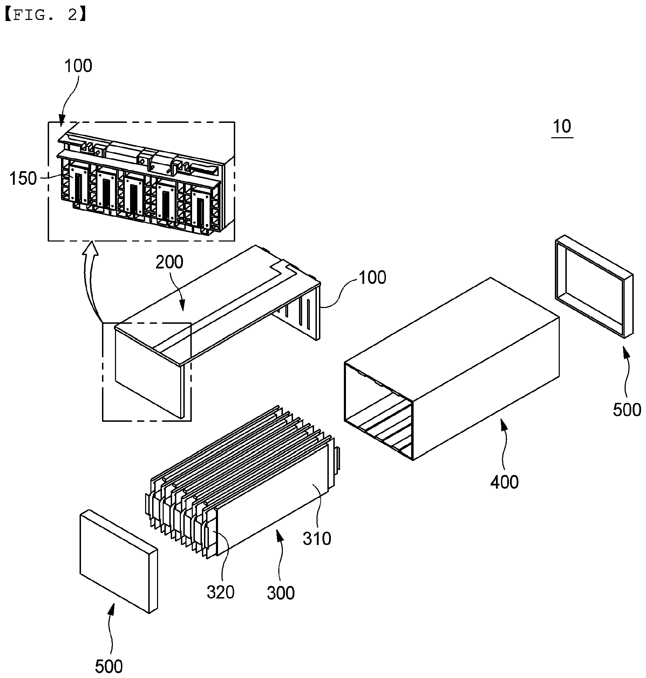

FIG. 2 is an exploded perspective view showing the schematic structure of a battery module.

Referring to FIG. 2, the battery module 10 includes a cell assembly 300 in which a plurality of battery cells 310 including electrode leads 320 is disposed in a row, an upper frame 200 located above the cell assembly 300, a busbar frame assembly 100 located at a side surface of the upper frame, the busbar frame assembly being configured to allow the electrode leads 320 to be connected to a busbar 150 so as to be fixed thereto, and a monoframe 400 and a side frame 500 configured to externally surround the above parts. All of these parts are coupled to each other to constitute one battery module 10.

The side frame may be made of steel or aluminum in order to improve structural rigidity of the battery module or may be made of plastic in order to achieve weight reduction and structural simplification.

The monoframe may have any one of a cover structure, a U-frame structure, and a cell to pack (CTP) structure. The monoframe may be configured to have a structure in which the top and bottom of the battery module are open and only plates are coupled to the outermost edge in a stacking direction of the battery cells.

Only the basic configuration of the battery module 10 is shown in FIG. 2 by way of example. However, the present invention is not limited thereto since the configuration of the battery module can be variously changed by those skilled in the art. Hereinafter, the structure and technical features of the busbar frame assembly 100 will be described in detail with reference to the drawings.

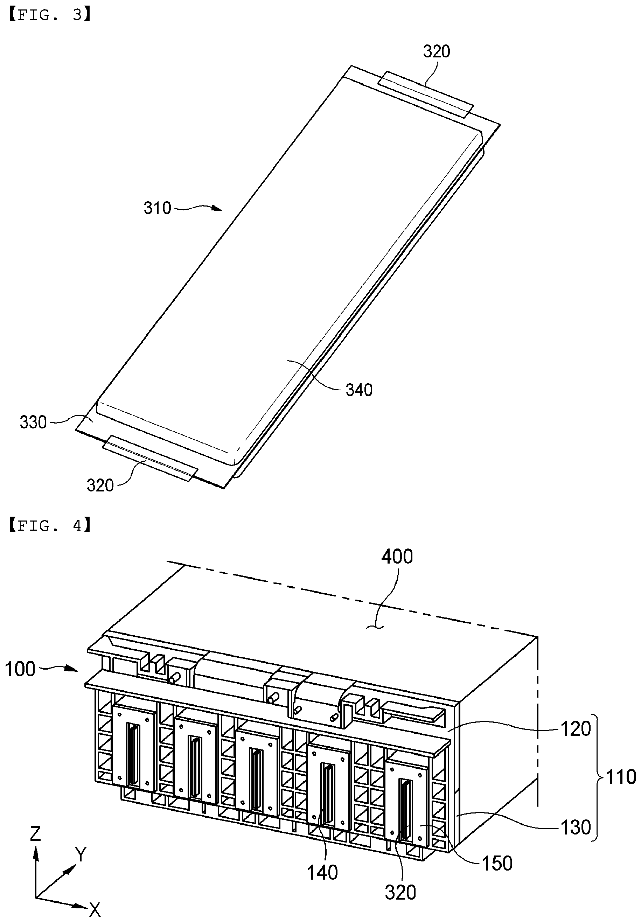

FIG. 3 is a perspective view of a battery cell that is mounted in a battery module according to a first preferred embodiment of the present invention. As shown in FIG. 3, the battery cell 310 includes a cell case 340, an electrode assembly (not shown) received in the cell case 340, a sealed portion 330 provided at an edge of the cell case 340, a pair of electrode tabs (not shown), and a pair of electrode leads 320, each of which has one side electrically connected to a corresponding one of the electrode tabs and the other side protruding outwardly from the cell case 340.

Specifically, a space portion configured to receive the electrode assembly is formed in the cell case 340 using a laminate sheet including an outer cover layer, a metal layer, and an inner cover layer.

In addition, the electrode leads 320 may be electrically connected to each other in series or in parallel using a busbar. However, the cell case 340, which is made of a laminate sheet, may be subject to a swelling phenomenon in which gas is generated during an activation process or to a phenomenon in which the electrode assembly is bent during a process of forming the electrode assembly, whereby the electrode leads 320 are bent. This may cause difficulty in inserting the electrode lead 320 into a slit (a hole configured to allow the electrode lead to be inserted thereinto) provided in the busbar frame so as to be fastened to the busbar.

Although a bidirectional battery cell having electrode leads 320 located so as to face each other is shown in the figure, a unidirectional battery cell having a pair of electrode leads 320 disposed so as to face in the same direction may be used. For the unidirectional battery cell, however, the busbar frame assembly 100 must be located at one side.

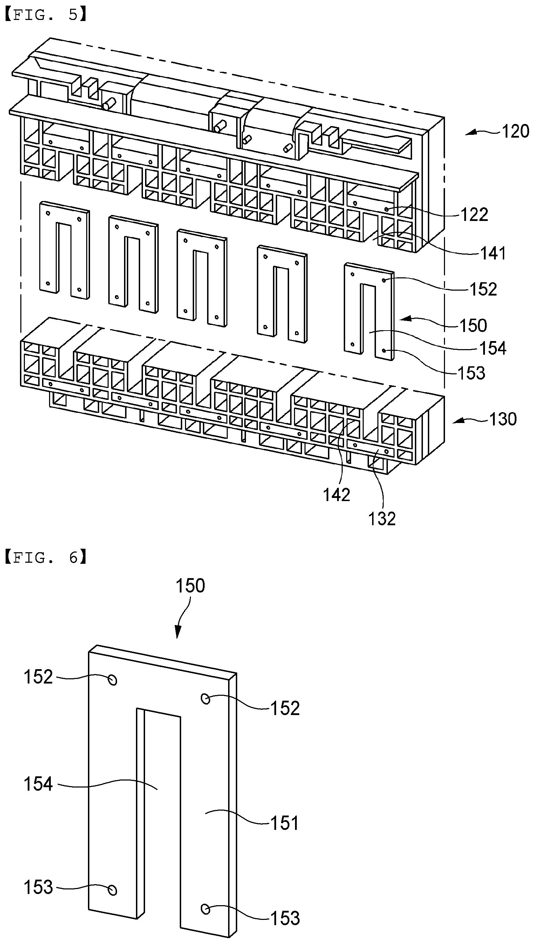

FIG. 4 is a perspective view of a busbar frame assembly 100 according to a first preferred embodiment of the present invention, and FIG. 5 is an exploded perspective view of the busbar frame assembly 100 of FIG. 4. In addition, FIG. 6 is a perspective view of a busbar 150 according to a first preferred embodiment of the present invention.

As shown in FIG. 4, the busbar frame assembly 100 is a single frame assembly configured to electrically connect electrode leads 320 provided at a plurality of battery cells 310 to each other in series or in parallel using a plurality of busbars 150, and may be connected to one monoframe 400.

In addition, although not specifically shown in FIG. 4, various kinds of sensors (a temperature sensor, an electrolyte leakage sensor, a current sensor, etc.) and means configured to control the sensors may be further added. However, these configurations correspond to technical configurations already known in the art, and therefore a detailed expression and description thereof will be omitted in the present invention.

Although grid type spaces are shown as being formed in the busbar frame assembly 100 in the figures, which is only an example, modification thereof is possible, and although means for connection between the plurality of busbars 150 is not shown, the means for connection between the busbars 150 will be readily understood by those skilled in the art.

In the busbar frame assembly 100 according to the first embodiment of the present invention, the busbar frame 110 is constituted by an upper busbar frame 120 located at an upper end and a lower busbar frame 130 located at a lower end, wherein the upper and lower busbar frames 120 and 130 may be detached from and coupled each other.

Referring to FIGs. 4 and 5, each of the upper and lower busbar frames 120 and 130 is provided with a plurality of spaces through which the electrode leads 320 may extend. The upper busbar frame 120 is provided with an upper pass-through portion 141, and the lower busbar frame 130 is provided with a lower pass-through portion 142.

In addition, when the upper and lower busbar frames 120 and 130 are coupled to each other, the upper pass-through portion 141 and the lower pass-through portion 142 are coupled to each other to form a rectangular space into which the electrode leads 320 can be inserted. In addition, although the number of electrode leads 320 protruding into the pass-through portion 140 is not clearly shown in the figures, at least one electrode lead may protrude; however, the present invention is not limited thereto.

The busbar 150 shown in FIG. 4 is configured to connect a plurality of electrode leads 320 to each other in series or in parallel. The busbar 150 is a conductor made of a metallic material that exhibits good electrical conductivity with low impedance and high current capacity, such as copper or aluminum, and a plurality of busbars 150 is disposed side by side in a direction in which the plurality of battery cells 310 is stacked.

The busbar 150 according to the first embodiment shown in FIGs. 4 to 6 is configured in the form of a "["-shaped plate provided with an open space 154 formed at one side thereof and having a uniform thickness, and includes a busbar body 151 and an upper busbar fastening hole 152 and a lower busbar fastening hole 153 configured to allow the busbar 150 to be fastened to the upper and lower busbar frames 120 and 130 therethrough using bolts. Here, a lead insertion portion 154, which is an open space, is a space into which the electrode lead 132 is inserted, and the busbar body 151 is a part that is electrically connected to the inserted electrode lead 132 through a process such as welding.

In addition, the busbar 150 is only an example, and the present invention is not limited thereto. The busbar may be modified so as to have any of various structures capable of achieving electrical connection. Although the means for connection between the plurality of busbars 150 is not shown in the figures, series/parallel connection between the busbars 150 using a separate inter-busbar, etc. for electrical connection between the busbars may be sufficiently practiced by those skilled in the art, and therefore a detailed description thereof will be omitted.

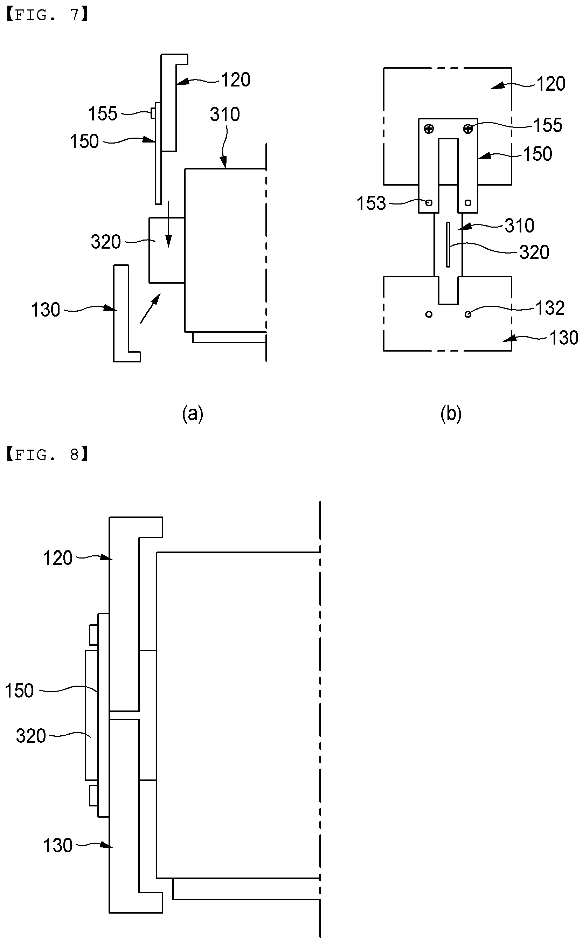

FIG. 7 is a front view and a side view showing an example of the state of the busbar frame assembly 100 according to the first preferred embodiment of the present invention before assembly, wherein (a) of FIG. 7 is a side view of FIG. 4 when viewed in an X-axis direction, and (b) of FIG. 7 is a front view of FIG. 4 when viewed in a Y-axis direction. FIG. 8 is a view showing the assembled state of the busbar frame assembly 100 according to the first preferred embodiment of the present invention.

Referring to (a) and (b) of FIG. 7, first, the busbar 150 is fastened to the upper busbar frame 120 using a bolt 155 before being fitted onto the electrode lead 320. At this time, the lead insertion portion 154 of the busbar 150 is located so as to face the upper pass-through portion 141, which is a space provided in the upper busbar frame 120.

The upper pass-through portion 141 of the upper busbar frame 120 is fitted onto the electrode lead 320 while moving to the electrode lead located thereunder from above such that one electrode lead 320 is inserted thereinto. In addition, the upper busbar frame 120 is fitted first, and the lower busbar frame 130 is moved downward or forward such that the electrode lead 320 is inserted thereinto.

FIG. 8 shows the state in which the upper and lower busbar frames 120 and 130 are fastened to each other after insertion of the electrode lead 320 in FIG. 7, wherein the busbar 150 is fastened to the lower busbar frame 130 through the lower busbar fastening hole 153 using a bolt.

In addition, although not shown in FIG. 8, the upper busbar frame 120 and the lower busbar frame 130 may also be fixed to each other by fastening using a bolt, etc., and the upper and lower busbar frames 120 and 130 may also be fastened to each other using various methods without limitation.

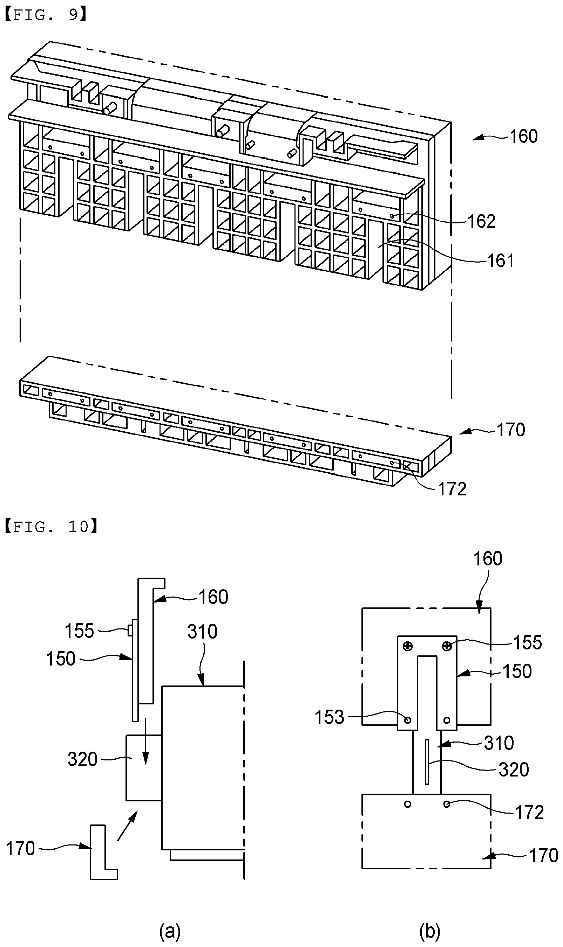

FIG. 9 is a view showing the structure of an upper busbar frame 160 and a lower busbar frame 170 according to a second preferred embodiment of the present invention.

As shown in FIG. 9, a busbar frame assembly 100 according to a second embodiment of the present invention is identical to the busbar frame assembly 100 according to the first embodiment in that a busbar 150 is provided, an upper busbar frame 120 located at an upper end and a lower busbar frame 130 located at a lower end are separated from and coupled to each other, and a busbar frame 110 having upper and lower fastening holes 162 and 172, to which the busbar 150 is fastened, is provided.

However, an upper pass-through portion 161, which is a space through which the electrode lead 320 can extend, is provided in only the upper busbar frame 160 according to the second embodiment of the present invention, and no separate space is formed in the lower busbar frame 170. At this time, the upper pass-through portion 161 must be at least as large as the space in which the electrode lead 320 can be sufficiently inserted.

In addition, the configuration of the busbar 150 added to the busbar frame 160 according to the second embodiment and the upper and lower fastening holes 162 and 172 is identical to the configuration of the busbar frame 110 of the first embodiment, and therefore a duplicate description thereof will be omitted.

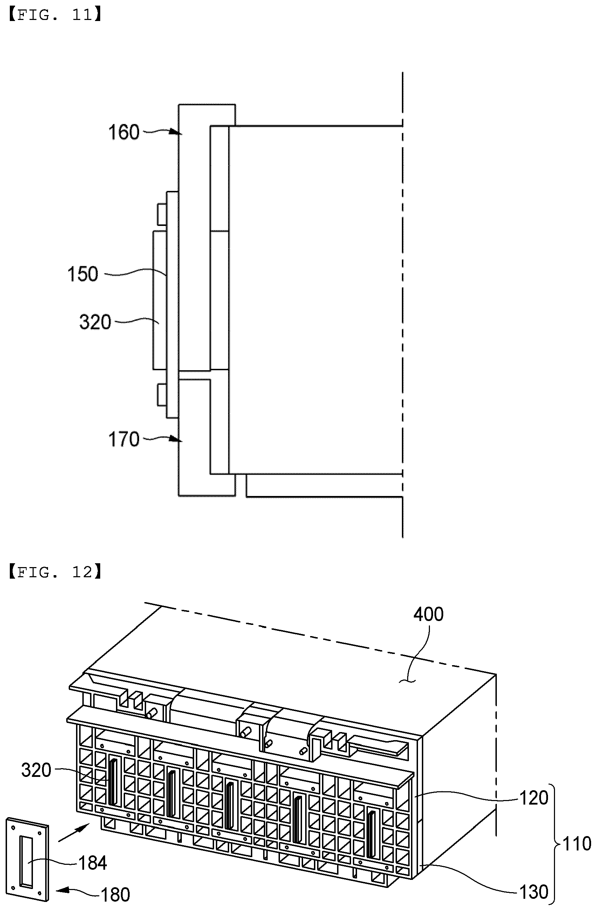

FIG. 10 is a front view and a side view showing an example of the state of the busbar frame assembly 100 according to the second preferred embodiment of the present invention before assembly, wherein (a) of FIG. 10 is a side view of FIG. 4 when viewed in the X-axis direction, and (b) of FIG. 10 is a front view of FIG. 4 when viewed in the Y-axis direction. FIG. 11 is a view showing the assembled state of the busbar frame assembly 100 according to the second preferred embodiment of the present invention, and a duplicate description thereof will be omitted.

Referring to FIG. 10, the upper busbar frame 160 is identical in fastening form to the upper busbar frame 120 according to the first embodiment of FIG. 7, and a duplicate description thereof will be omitted. However, the lower busbar frame 170 is not provided with a space through which the electrode lead 320 of the battery cell 310 extends, and therefore it is sufficient for the electrode lead to be fastened to the busbar 150 and the upper busbar frame 160.

As described above, the first embodiment is characterized in that the upper and lower busbar frames 120 and 130 are separated from each other at a middle part of the electrode lead 320, which requires the electrode lead 320 to be fastened to both the upper and lower busbar frames 120 and 130, whereas in the upper and lower busbar frames 160 and 170 according to the second embodiment, it is sufficient for the electrode lead 320 to be fastened to only the upper busbar frame 160.

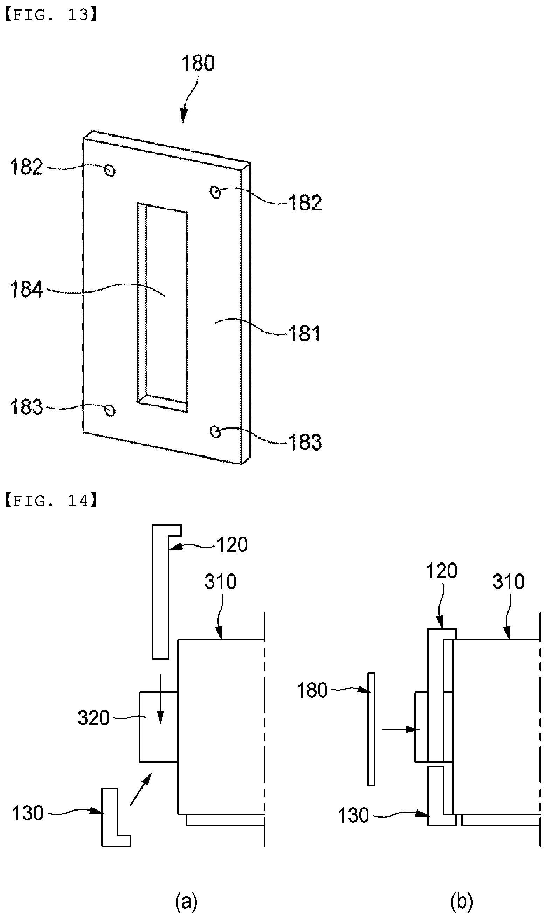

FIG. 12 is a view showing the assembled state of a busbar frame assembly according to a third preferred embodiment of the present invention, and FIG. 13 is a perspective view of a busbar 180 according to a third preferred embodiment of the present invention.

The busbar frame 110 according to each of the first and second embodiments of the present invention is characterized in that the electrode lead 320 is inserted into the upper busbar frame 120 or 160 in the state in which the busbar 150 is fastened first to the upper busbar frame. In the third embodiment of the present invention, however, the busbar 180 is fastened in the state in which the upper and lower busbar frames 120 and 130 are fastened first to each other, as shown in FIG. 12.

Referring to FIG. 13, the busbar 180 according to the third embodiment of the present invention is "□"-shaped, includes a lead insertion portion 184, which is a single rectangular open space, formed in a busbar body 181, and has upper and lower busbar fastening holes 182 and 183 for fastening to the busbar frame 110. However, the busbar 180 of the third embodiment is not limited thereto, and the "["-shaped busbar 150 according to each of the first and second embodiments may be used instead thereof.

FIG. 14 is a front view and a side view showing an example of the state of the busbar frame assembly 100 according to the third preferred embodiment of the present invention before assembly, wherein (a) of FIG. 14 is a side view of FIG. 4 when viewed in the X-axis direction, and (b) of FIG. 14 is a front view of FIG. 4 when viewed in the Y-axis direction.

Referring to FIG. 14, the third embodiment is different in assembled state from the first embodiment shown in FIG. 7 in that the upper busbar frame 120 and the lower busbar frame 130 are first coupled to each other and the busbar 150 and then the electrode lead 320 of the battery cell 310 is inserted into the busbar 150. A process in which the electrode lead 320 is inserted into and fastened to the busbar fame 110 is identical to the process shown in FIG. 7, and therefore a duplicate description thereof will be omitted.

A method of assembling a battery module according to a preferred first embodiment of the present invention includes a first step of fixing electrode leads 320 provided at a plurality of battery cells 310 in a direction perpendicular to a busbar frame 110 so as to extend through a pass-through portion 140 of the busbar frame 110, a second step of fixing a plurality of busbars 150 so as to face an upper pass-through portion 140 provided in an upper busbar frame 120, a third step of inserting the electrode leads 132 downward into the upper pass-through portion 141 of the upper busbar frame 120, a fourth step of inserting the electrode leads 132 into a lower pass-through portion 142 of a lower busbar frame 130, a fifth step of fixing the lower busbar frame 130 to the upper busbar frame 120, a sixth step of fixing the plurality of busbars 150 to the lower busbar frame 130, and a seventh step of electrically connecting the electrode leads 132 to the busbars 150.

In the first step, the plurality of battery cells 130 may be aligned using a jig in advance.

Meanwhile, in the third embodiment, the second step of fixing the busbars 150 to the upper busbar frame 120 may be simultaneously performed in the fifth step.

In the second embodiment, i.e., when the lower busbar frame 130 is provided with no lower pass-through portion 142, the fourth step may be omitted.

In addition, a step of coupling an upper frame 200, a monoframe 400, and a side frame 500 to each other to constitute one battery module 10 may be further added after the seventh step; however, this step is an assembly step that is easily performed by those skilled in the art, and therefore a detailed description thereof will be omitted.

The present invention has been described above with reference to specific embodiments. However, those skilled in the art to which the present invention pertains will appreciate that various applications and modifications are possible within the category of the present invention based on the above description.

### (Description of Reference Numerals)

10: Battery module
100: Busbar frame assembly
110: Busbar frame
120, 160: Upper busbar frames
122, 162: Upper fastening holes
130, 170: Lower busbar frames
132, 172: Lower fastening holes
140: Pass-through portion
141, 161: Upper pass-through portions
142: Lower pass-through portion
150, 180: Busbars
151, 181: Busbar bodies
152, 182: Upper busbar fastening holes
153, 183: Lower busbar fastening holes
154, 184: Lead insertion portions
155: Fastening bolt
200: Upper frame
300: Cell assembly
310: Battery cell
320: Electrode lead
330: Sealed portion
340: Cell case
400: Monoframe
500: Side frame

## Claims

1. A battery module, comprising:
a cell assembly having a plurality of battery cells and having a plurality of electrode leads, the plurality of battery cells being stacked in at least one direction, and
at least one busbar frame assembly connecting the plurality of electrode leads to a busbar,
wherein the cell assembly and the at least one busbar frame assembly constitute a cell stack assembly, and
wherein the busbar frame assembly comprises:
a busbar frame disposed on at least one side of the plurality of battery cells, the busbar frame being constituted by an upper busbar frame and a lower busbar frame configured to be separated from each other;
a plurality of pass-through portions provided in the busbar frame, the plurality of pass-through portions being configured to allow the electrode leads of the plurality of battery cells pass to extend therethrough; and
a plurality of busbars disposed to face the plurality of pass-through portions, the plurality of busbars being electrically connected to the plurality of electrode leads.

2. The battery module according to claim 1, wherein the electrode leads protrude through the plurality of pass-through portions provided in the busbar frame and lead insertion portions of the busbars.

3. The battery module according to claim 1, wherein the plurality of busbars are fastened to the upper busbar frame and the lower busbar frame.

4. The battery module according to claim 1, wherein each of the plurality of busbars comprises a space into which a corresponding one of the electrode leads is inserted and has a "[" shape open at one side.

5. The battery module according to claim 1, wherein each of the plurality of busbars comprises a space into which a corresponding one of the electrode leads is inserted and has a "0" shape not open at one side.

6. The battery module according to claim 4 or 5, wherein each of the plurality of busbars comprises at least one upper fastening hole configured to allow the busbar to be fixed to the upper busbar frame therethrough using a bolt and at least one lower fastening hole configured to allow the busbar to be fixed to the lower busbar frame therethrough using a bolt.

7. The battery module according to claim 1, wherein the plurality of pass-through portions are formed by upper pass-through portions of the upper busbar frame and lower pass-through portions of the lower busbar frame being coupled to each other.

8. The battery module according to claim 1, wherein the plurality of pass-through portions are located in only the upper busbar frame.

9. A method of assembling the battery module according to any one of claims 1 to 8, the method comprising:
a first step of fixing electrode leads provided at a plurality of battery cells in a direction perpendicular to a busbar frame;
a second step of fixing a plurality of busbars so as to face an upper pass-through portion provided in an upper busbar frame;
a third step of inserting the electrode leads downward into the upper pass-through portion of the upper busbar frame;
a fourth step of inserting the electrode leads into a lower pass-through portion of a lower busbar frame;
a fifth step of fixing the lower busbar frame to the upper busbar frame;
a sixth step of fixing the plurality of busbars to the lower busbar frame; and
a seventh step of electrically connecting the electrode leads to the busbars.

10. The method according to claim 9, wherein, in the first step, the plurality of battery cells is aligned using a jig.

11. The method according to claim 9, wherein the second step is performed in the sixth step.

12. The method according to claim 9, wherein, when the lower pass-through portion is not provided in the lower busbar frame, the fourth step is omitted.

13. A battery pack comprising at least one battery module according to claim 1.
